# DEMANDE DE BREVET EUROPEEN

(11) **EP 4 191 457 A1**
(43) Date de publication de la demande: **07.06.2023**
(21) Numéro de dépôt: 22209131.6
(22) Date de dépôt: 23.11.2022
(51) Int. Cl.: G06F 21/73, H01L 21/311, H01L 21/3213, H01L 23/00

(54) **PROCÉDÉ DE RÉALISATION D'UNE ZONE D'INDIVIDUALISATION D'UN CIRCUIT INTÉGRÉ**

(30) Priorité: 30.11.2021 FR 2112767
(71) Demandeur: Commissariat à l'énergie atomique et aux énergies alternatives, 75015 Paris (FR)
(72) Inventeur: POSSEME, Nicolas, 38054 GRENOBLE Cedex 09 (FR); LANDIS, Stefan, 38054 GRENOBLE Cedex 09 (FR); SARRAZIN, Aurélien, 38054 GRENOBLE Cedex 09 (FR); TEYSSEDRE, Hubert, 38054 GRENOBLE Cedex 09 (FR)
(74) Mandataire: Hautier IP

(57) **Abrégé**

L'invention porte sur un procédé de réalisation d'une zone d'individualisation (1) d'une puce, comprenant au moins les étapes suivantes :
- fournir un empilement comprenant au moins une couche de masque (300),
- former une couche de transfert (400) d'épaisseur hc à base d'un matériau carboné hydrogéné sur la couche de masque (300),
- graver la couche de transfert (400) de sorte à former des premiers motifs de lignes (410) de largeur l,
- graver la couche de masque (300) entre les premiers motifs de lignes (410), de sorte à former des deuxièmes motifs de lignes (310) dans la couche de masque (300),
le procédé étant caractérisé en ce que l'épaisseur hc et la largeur I sont choisies telles que hc/l ≥ 6, de sorte à ce que les premiers motifs de lignes (410) présentent, après gravure de la couche de transfert (400), des oscillations aléatoires.

## Description

### DOMAINE TECHNIQUE

La présente invention concerne l'individualisation des circuits intégrés. Elle trouve pour application particulièrement avantageuse la protection de circuits intégrés, de composants ou de dispositifs intégrant de tels circuits.

### ETAT DE LA TECHNIQUE

L'individualisation d'un circuit intégré dans un composant permet l'identification unique de ce composant. Cela permet par exemple de protéger le composant contres des attaques par émulation des fonctions que le composant est sensé faire.

Afin d'identifier de manière unique un circuit intégré, il existe des solutions visant à utiliser les dispersions fonctionnelles inhérentes aux circuits intégrés. Les résistances des lignes d'interconnexion métallique ou des vias diffèrent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

Le document EP3418936A1 décrit une solution d'individualisation au niveau des interconnexions du circuit, basée sur le transfert de motifs de copolymères dont les domaines sont aléatoirement répartis. Cette solution reste complexe à mettre en œuvre. Elle n'est pas non plus directement applicable à l'individualisation de niveaux de « début de ligne », dit FEOL (acronyme de « Front End Of Line »), par exemple un niveau de grille.

Il existe donc un besoin consistant à limiter, voire à résoudre, les problématiques des solutions connues.

### RESUME

Pour atteindre cet objectif, selon un mode de réalisation on prévoit un procédé de réalisation d'une zone d'individualisation d'une puce microélectronique, ladite puce présentant au moins une autre zone, distincte de la zone d'individualisation, destinée à former une zone fonctionnelle de la puce.

Le procédé comprend au moins les étapes suivantes effectuées au niveau de la zone d'individualisation de la puce :
- fournir un empilement comprenant au moins une couche de masque,
- former une couche de transfert à base d'un matériau carboné hydrogéné sur la couche de masque, ladite couche de transfert présentant une épaisseur h_{c},
- graver la couche de transfert de sorte à former des premiers motifs de lignes de largeur l, organisés selon un plan d'agencement prédéfini et traversant la zone d'individualisation de part en part, lesdits premiers motifs de lignes étant destinés à être transférés dans la couche de masque,
- graver la couche de masque entre les motifs de lignes, de sorte à former des deuxièmes motifs de lignes dans la couche de masque, sous les premiers motifs de lignes
- De préférence, graver l'empilement sous la couche de masque, entre les deuxièmes motifs de lignes, de sorte à transférer ces deuxièmes motifs de ligne dans l'empilement.

Avantageusement, l'épaisseur h_{c} et la largeur l sont choisies telles que h_{c}/l ≥ 6, de sorte à ce que les premiers motifs de lignes présentent, après gravure de la couche de transfert, des oscillations aléatoires.

Les oscillations sont typiquement générées par flambage des premiers motifs de ligne. La déformation des premiers motifs de lignes à base du matériau carboné hydrogéné va typiquement dépendre de la largeur l des premiers motifs de lignes, et de l'épaisseur h_{c} de la couche de transfert (typiquement la hauteur des premiers motifs de ligne). Le processus de flambage ou de relaxation mécanique dépendant de ces paramètres génère des oscillations chaotiques et aléatoires.

Ces premiers motifs de lignes oscillants sont ensuite transférés dans la couche de masque, par gravure, typiquement par gravure anisotrope selon une direction z normale à la couche de masque. Des deuxièmes motifs de lignes présentant les mêmes oscillations que les premiers motifs de lignes sont ainsi obtenus. Ces deuxièmes motifs de lignes sont avantageusement utilisés comme masque de gravure pour graver l'empilement sous-jacent, typiquement par gravure anisotrope selon z. En fonction de la nature de l'empilement, ce procédé peut être mis en œuvre pour structurer des niveaux de « début de ligne », dits FEOL (acronyme de « Front End Of Line »), ou des niveaux de « fin de ligne », dits BEOL (acronyme de « Back End Of Line »).

Dans le cas où l'empilement comprend un empilement de grille, le procédé permet de former directement des grilles de transistors présentant des oscillations aléatoires, selon un transfert des deuxièmes motifs de lignes en positif.

Dans le cas où l'empilement comprend une couche diélectrique destinée à être structurée pour former des pistes métalliques d'un niveau métal, le procédé permet de former directement des lignes diélectriques présentant des oscillations aléatoires, selon un transfert des deuxièmes motifs de lignes en positif, et indirectement des pistes métalliques présentant des bords oscillants aléatoirement, selon un transfert des deuxièmes motifs de lignes en négatif. Typiquement, les oscillations sont transférées aux lignes diélectriques par gravure. Chaque tranchée gravée et bordée par deux lignes diélectriques oscillant aléatoirement présente dès lors une largeur et/ou une position variant aléatoirement. Après remplissage des tranchées par un métal, les pistes métalliques ou électriques ainsi formées présentent également ces mêmes variations aléatoires de largeur et/ou de position. Les pistes électriques présentent donc une morphologie qui dépend également des oscillations aléatoires.

Dès lors, la formation des vias selon le plan d'agencement prédéfini, que ce soit sur un niveau de contact pour les grilles des transistors, ou que ce soit sur un niveau d'interconnexions entre pistes électriques, implique qu'une partie des vias n'est pas connectée ou mal connectée aux grilles ou aux pistes électriques. Les vias comprennent alors des vias fonctionnels connectés électriquement aux grilles ou aux pistes électriques, des vias dysfonctionnels partiellement connectés électriquement aux grilles ou aux pistes électriques, et des vias inactifs non connectés électriquement aux grilles ou aux pistes électriques.

La répartition de ces vias fonctionnels, dysfonctionnels et inactifs dépend des oscillations aléatoires induites par le procédé.

Le procédé proposé permet donc de déformer volontairement mais aléatoirement un niveau de grilles ou de pistes électriques. Cette déformation volontaire permet de créer des vias inactifs répartis de façon aléatoire au sein de la zone d'individualisation de la puce. Le diagramme de réponse de la puce ou du circuit intégré sera donc intimement lié au caractère aléatoire de la répartition des vias inactifs. Cette réponse sera par conséquent unique. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en œuvre et à un cout réduit, afin de réaliser une zone d'individualisation d'un circuit intégré. Ce procédé est avantageusement applicable à la réalisation d'une zone d'individualisation à un niveau FEOL et/ou à la réalisation d'une zone d'individualisation à un niveau BEOL.

Un autre aspect concerne un procédé de réalisation d'un dispositif microélectronique comportant au moins un circuit intégré comprenant au moins une zone d'individualisation réalisée en mettant en œuvre le procédé précédent sur une partie seulement du circuit intégré.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1A représente en vue de dessus une grille connectée par un via de contact fonctionnel.
La figure 1B représente en vue de dessus une grille oscillante connectée par un via de contact dysfonctionnel ou inactif, selon un exemple de réalisation de la présente invention.
La figure 2 est une image de microscopie électronique à balayage en vue de dessus de grilles présentant des oscillations aléatoires après gravure, selon un mode de réalisation de la présente invention.
Les figures 3A à 3C illustrent en coupe des étapes de fabrication d'une grille oscillante, selon un exemple de réalisation de la présente invention.
La figure 4A représente en vue de dessus un niveau métal connecté par des vias fonctionnels d'un niveau d'interconnexion.
La figure 4B représente en vue de dessus un niveau métal connecté par un via fonctionnel et un via dysfonctionnel ou inactif d'un niveau d'interconnexion, selon un exemple de réalisation de la présente invention.
La figure 5 est une image de microscopie électronique à balayage en vue de dessus de lignes diélectriques présentant des oscillations aléatoires après gravure, selon un mode de réalisation de la présente invention.
Les figures 6A à 6F illustrent des étapes de fabrication d'un circuit intégré comprenant au moins une zone fonctionnelle et une zone d'individualisation, selon un exemple de réalisation de la présente invention.
La figure 7 représente en vue de dessus des pistes électriques d'un premier niveau métal formées dans les zones fonctionnelle et d'individualisation d'un circuit intégré, selon un mode de réalisation de la présente invention.
La figure 8 représente en vue de dessus des pistes électriques du premier niveau métal associées à des vias fonctionnels formés dans une zone fonctionnelle d'un circuit intégré, et des pistes électriques du premier niveau métal présentant des oscillations aléatoires, associées à des vias fonctionnels et à des vias dysfonctionnels ou inactifs formés dans une zone d'individualisation du circuit intégré, selon un exemple de réalisation de la présente invention.
La figure 9 représente en vue de dessus des pistes électriques d'un deuxième niveau métal associées à des vias fonctionnels formés dans une zone fonctionnelle d'un circuit intégré, et des pistes électriques du deuxième niveau métal associées à des vias fonctionnels et à des vias dysfonctionnels ou inactifs formés dans une zone d'individualisation du circuit intégré, selon un exemple de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs et les dimensions des différentes couches, vias et motifs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la formation de la couche de transfert comprend une centrifugation du matériau carboné hydrogéné.

Selon un exemple, la formation de la couche de transfert comprend un dépôt de carbone amorphe.

Selon un exemple, les premiers motifs de lignes sont rectilignes avant gravure de la couche de transfert.

Selon un exemple alternatif couvert par la présente invention, les motifs de lignes sont curvilignes avant gravure de l'au moins une couche diélectrique. Les oscillations aléatoires formées après gravure se superposent au motif de ligne rectiligne ou curviligne initial, c'est-à-dire avant gravure.

Selon un exemple, la zone d'individualisation de la puce comprend au moins :
- un niveau de transistors comprenant des grilles de transistors,
- un niveau de contacts comportant des vias destinés à connecter électriquement les grilles des transistors, et l'empilement comprend au moins un empilement de grille sous la couche de masque,

Selon un exemple, le procédé comprend en outre :
- une gravure de l'empilement de grille entre les deuxièmes motifs de lignes formés dans la couche de masque, de sorte à former les grilles du niveau de transistors, sous lesdits deuxièmes motifs de lignes,
- une formation des vias du niveau de contacts en fonction du plan d'agencement prédéfini, les oscillations aléatoires étant telles que certains au moins des vias ne sont pas connectés ou ne sont pas entièrement connectés aux grilles du niveau de transistors.

Selon un exemple, la couche de masque est à base d'au moins un matériau pris parmi le dioxyde de silicium et le nitrure de silicium.

Selon un exemple, la zone d'individualisation de la puce comprend au moins :
- un premier et un deuxième niveaux de pistes électriques,
- un niveau d'interconnexions situées entre les premiers et deuxième niveaux de pistes électriques et comportant des vias destinés à connecter électriquement des pistes électriques du premier niveau avec des pistes électriques du deuxième niveau, et l'empilement comprend au moins une couche diélectrique sous la couche de masque.

Selon un exemple, le procédé comprend en outre :
- une gravure de ladite couche diélectrique entre les deuxièmes motifs de lignes formés dans la couche de masque, de sorte à former des tranchées dans la couche diélectrique,
- un remplissage par un matériau électriquement conducteur des tranchées formées dans la couche diélectrique, de sorte à former les pistes électriques de l'un au moins parmi les premier et deuxième niveaux de pistes électriques,
- une formation des vias du niveau d'interconnexions en fonction du plan d'agencement prédéfini,
- une formation de l'autre parmi les premier et deuxième niveaux de pistes électriques, les oscillations aléatoires étant telles que certains au moins des vias ne sont pas connectés ou ne sont pas entièrement connectés aux pistes électriques du premier niveau ou du deuxième niveau de pistes électriques.

Selon un exemple, la couche de masque est à base d'au moins un matériau pris parmi le titane et le nitrure de titane.

Selon un exemple, le procédé comprend en outre une formation de motifs de lignes dans la zone fonctionnelle, lesdits motifs de lignes présentant une hauteur h_{f} et une largeur l_{f} telles que h_{f}/l_{f} < 6.

Selon un exemple, la formation du deuxième niveau de pistes électriques est effectuée de sorte à ce que les pistes électriques du deuxième niveau présentent également des oscillations aléatoires. Cela permet d'augmenter la probabilité de connexions défectueuses entre les pistes électriques des premier et deuxième niveaux.

Selon un exemple, le procédé comprend en outre les étapes suivantes :
- former dans la zone d'individualisation un masque de protection sur la couche de transfert préalablement à la formation des premiers motifs de ligne,
- graver la couche de transfert dans la zone fonctionnelle, en dehors de la zone d'individualisation, de sorte que la couche de transfert dans la zone fonctionnelle présente une épaisseur h_{f} < h_{c},
- retirer le masque de protection avant de former les premiers motifs de lignes dans la zone d'individualisation.

Selon un exemple, les motifs de lignes sont formés successivement dans la zone fonctionnelle et dans la zone d'individualisation.

Un niveau de « début de ligne », dit FEOL (acronyme de « Front End Of Line ») correspond typiquement à un niveau portant des composants élémentaires, par exemple des transistors, réalisé sur le substrat de base. Un niveau de « fin de ligne », dit BEOL (acronyme de Back End Of Line), correspondant correspond typiquement à un niveau portant des interconnections électriques, réalisé après le niveau FEOL et/ou après d'autres niveaux BEOL.

La réalisation de grilles ou de pistes électriques présentant des oscillations aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente typiquement une surface plus grande que la surface de la zone d'individualisation. Les grilles ou les niveaux de pistes électriques s'étendent dans ladite au moins une autre zone. De manière classique, la zone fonctionnelle du circuit intégré comprend des entrées et des sorties logiques. Cette zone fonctionnelle est destinée à assurer des fonctions logiques pour le fonctionnement attendu du circuit intégré. Outre des pistes électriques ou des transistors, cette zone fonctionnelle peut éventuellement comprendre d'autres structures microélectroniques, telles que des diodes, des MEMS etc.

La zone d'individualisation a quant à elle pour fonction de rendre unique chaque circuit intégré.

Dans le cadre de la présente invention, une zone d'individualisation dite PUF est parfaitement différenciée d'une zone fonctionnelle destinée par exemple à effectuer des opérations logiques. La zone d'individualisation quant à elle a principalement et de préférence uniquement comme fonction de permettre l'identification unique de la puce et donc son authentification de la puce. La zone d'individualisation est accessible distinctement de la zone fonctionnelle. La zone d'individualisation est localisée sur une zone bien délimitée de la puce. La zone d'individualisation est par exemple de forme polygonale, par exemple rectangulaire. Ainsi, n'importe quelle zone défectueuse ne peut pas être assimilable à une zone d'individualisation PUF. De même, n'importe quelle zone non défectueuse ne peut pas être assimilable à une zone fonctionnelle.

La zone fonctionnelle présente typiquement une surface au moins deux fois supérieure à celle de la zone d'individualisation. La zone d'individualisation s'étend sur au moins 5% et de préférence sur au moins 10% de la surface du circuit intégré.

Dans la présente demande, les termes « puce » et « circuit intégré » sont employés en synonymes.

Dans la présente demande, les termes « oscillations » et « ondulations » sont employés en synonymes. Ces termes désignent une forme sinueuse, faite de courbes alternativement concaves et convexes. Les oscillations ne sont pas nécessairement périodiques. Elles se superposent au motif de lignes initialement prévu par le plan d'agencement du circuit ou « layout », qui est le terme couramment employé pour désigner ce plan d'agencement. Les expressions « plan d'agencement » et « agencement » sont équivalentes et peuvent être substituées l'une à l'autre.

Il est précisé que, dans le cadre de la présente invention, le terme via regroupe toutes les connexions électriques tels que les plots, lignes et structures conductrices qui s'étendent, de préférence perpendiculairement, entre deux couches, successives ou non, du circuit intégré, soit entre deux niveaux de pistes électriques, soit entre un niveau de pistes électriques et un niveau de grilles par exemple. De préférence les vias forment chacun un plot, de section sensiblement circulaire.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, une structure « à base » d'un matériau A, un substrat, un film, une couche, une structure comprenant ce matériau A uniquement ou ce matériau A et éventuellement d'autres matériaux, par exemple des éléments dopants.

Plusieurs modes de réalisation de l'invention mettant en œuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Ainsi, selon une possibilité, les formations des premier et deuxième niveaux peuvent être interverties et le deuxième niveau peut être formé avant le premier niveau. La désignation « premier » et « deuxième » niveaux est arbitraire. Le procédé couvre également le cas où la formation du « deuxième » niveau est configurée de manière à ce que les pistes électriques du « deuxième » niveau soient fonction des oscillations aléatoires générées par la mise en œuvre du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl methacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Des couches et/ou des revêtements antireflets peuvent être associés aux résines. Cela permet notamment d'améliorer la résolution de lithographie. Dans la suite, les différents masques à base de résine sont de préférence associés à de telles couches antireflets.

Selon un exemple, la couche de masque peut être qualifiée de masque dur après structuration. Ce masque est notamment qualifié de « dur » par souci de distinction vis-à-vis des masques à base de résine. Il résiste aux gravures habituellement utilisées pour graver des masques de résine.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, on parlera préférentiellement d'épaisseur pour une couche et de profondeur pour une gravure. L'épaisseur est prise selon une direction normale au plan d'extension principal de la couche, et la profondeur est prise perpendiculairement au plan basal xy du substrat. Ainsi, une couche s'étendant parallèlement au plan basal présente typiquement une épaisseur selon z, et une gravure présente une profondeur selon z également. Les termes relatifs « sur », « surmonte », « sous », « sous-jacent » se réfèrent à des positions prises selon la direction z.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

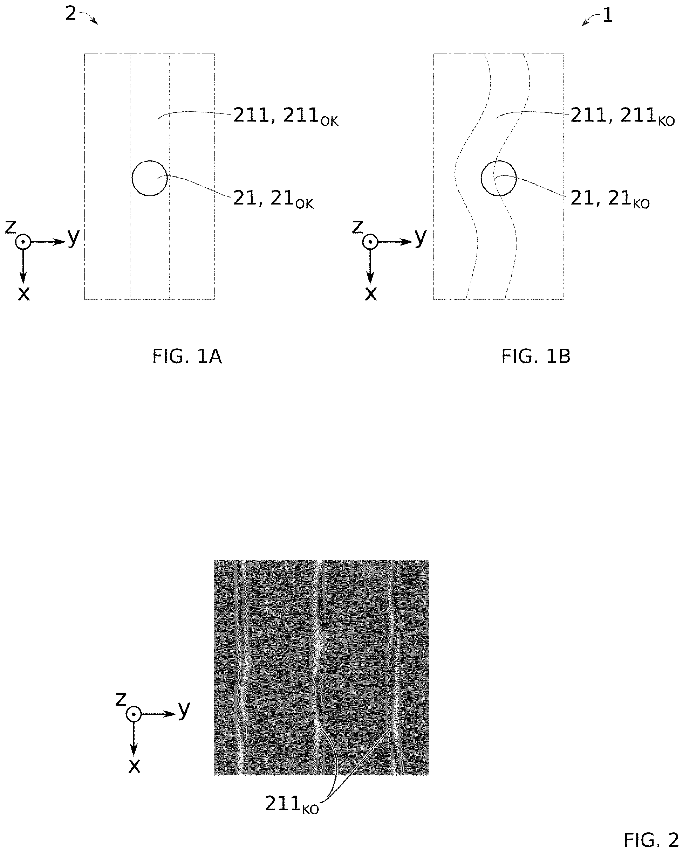

Les figures 1A et 1B représentent de manière schématique en vue de dessus une grille 211 d'un transistor d'un circuit intégré et un plot de contact 21de grille, respectivement dans une zone fonctionnelle 2 du circuit intégré (figure 1A), et dans une zone d'individualisation 1 du circuit intégré (figure 1B), au niveau FEOL.

Comme illustré à la figure 1A, dans la zone fonctionnelle 2 du circuit intégré, la ou les grilles 211 _{OK} sont sensiblement rectilignes et le ou les plots de contact 21_{OK} sont sensiblement centrés vis-à-vis de la ou des grilles 211_{OK}. Le plot de contact 21_{OK} connecte électriquement la grille 211_{OK} de façon nominale.

Comme illustré à la figure 1B, dans la zone d'individualisation 1 du circuit intégré, la ou les grilles 211_{KO} présentent des oscillations et le ou les plots de contact 21_{KO} sont désalignés vis-à-vis de la ou des grilles 211_{KO}. Le plot de contact 21_{KO} est ici électriquement mal connecté ou non connecté à la grille 211_{KO}. Dans cet exemple, les plots de contact 21_{KO} sont correctement disposés selon le plan d'agencement du circuit intégré, et le désalignement provient de la morphologie ondulée de la grille 211_{KO}. Ainsi, certains vias ou plot de contact 21_{KO} situés normalement à l'aplomb de la grille 211 sont partiellement connectés voire déconnectés. La résistance de contact connectant le transistor au niveau du plot de contact 21_{KO} est alors variable de manière aléatoire. Plus le plot de contact 21_{KO} est désaligné plus la résistance de contact est importante (inversement proportionnel à la surface de contact sur la grille). Le temps de réponse du transistor sera alors augmenté en fonction de la surface de connexion entre le plot de contact 21_{KO} et la grille du transistor. Cela permet de réaliser une fonction physique non clonable (PUF) composée de transistors ayant une géométrie aléatoire et une résistance de contact aléatoire.

La figure 2 correspond à une image de Microscopie Electronique à Balayage (MEB) sur laquelle de telles grilles 211_{KO} oscillantes ont été réalisées.

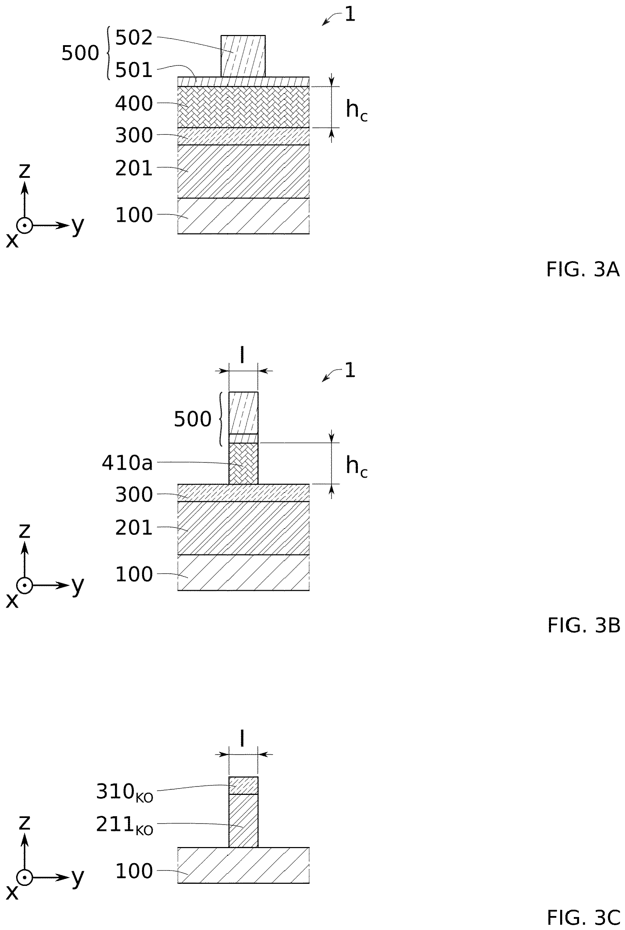

Les figures 3A à 3C illustrent schématiquement des étapes de formation des grilles 211_{KO} oscillantes, selon un mode de réalisation du procédé au niveau FEOL. Dans la suite, un seul motif de ligne est illustré par souci de clarté. Le procédé peut être typiquement mis en œuvre pour une pluralité de motifs de ligne.

Un substrat 100 portant un empilement de grille 201 est d'abord fourni. Le substrat 100 peut être un substrat massif à base de silicium dit bulk, ou un substrat de type semi-conducteur sur isolant, par exemple silicium sur isolant SOI (acronyme de « Silicon On Insulator ») ou germanium sur isolant GeOI (acronyme de « Germanium On Insulator»). La partie supérieure du substrat 100 peut également avoir été préalablement structurée sous l'empilement de grille 201, de façon à former un substrat dit 3D, comprenant par exemple un empilement de nanofils semi-conducteurs ou des structures en ailette destinées à former des transistors de type FinFET.

L'empilement de grille 201 peut typiquement comprendre plusieurs couches ou sous-couches, par exemple une couche de diélectrique de grille à base d'oxyde de silicium ou d'un matériau à haute constante diélectrique, surmontée par une couche de grille à base de silicium polycristallin ou d'un matériau métallique.

L'empilement de grille 201 est surmonté par une couche 300 de masque dur, désignée également masque dur 300 ou simplement masque 300. Ce masque 300 peut être à base d'oxyde de silicium SiO2 ou de nitrure de silicium SiN ou d'oxy-nitrure de silicium SiON. Selon possibilité le masque 300 comprend plusieurs couches, par exemple une couche de SiO2 et une couche de SiN. Il peut être formé par dépôt chimique en phase vapeur (CVD).

Une couche de transfert 400 est formée sur le masque dur 300. Cette couche de transfert est à base d'un matériau carboné hydrogéné. Elle peut être formée par dépôt CVD de carbone amorphe. Selon une autre possibilité elle peut être formée par centrifugation d'un polymère, par exemple selon un procédé connu sous la dénomination « spin on carbon » (SOC). La couche de transfert 400 présent une épaisseur h_{c} selon z par exemple comprise entre 100 nm et 300 nm, par exemple de l'ordre de 150 nm.

La couche de transfert 400 est typiquement structurée par lithographie par l'intermédiaire d'un masque 500. Différentes techniques de lithographie peuvent être utilisées, par exemple la lithographie optique, la lithographie électronique par faisceau d'électrons (ebeam), la lithographie par nanoimpression. En fonction de la technique de lithographie mise en œuvre, le masque 500 peut être formé d'une ou plusieurs couches 501, 502. Il peut comprendre une couche 502 à base de résine, par exemple de résine photosensible, par exemple à tonalité positive. Un revêtement antireflets sous-jacent 501 de type BARC (Bottom Anti Reflective Coating signifiant revêtement anti-reflexion de fond) ou SiARC (silicon anti reflective coating signifiant revêtement anti réflexion à base de silicium) est de préférence utilisé. La couche 502 à base de résine 500 peut présenter une épaisseur comprise entre 100 nm et 500 nm. Le revêtement antireflets 501 peut présenter une épaisseur comprise entre 20 nm et 80 nm. De préférence, la ou les couches de masque 500 sont déposés par une méthode classique de spin coating (à la tournette).

La figure 3A illustre une première étape de lithographie visant à former un motif de ligne dans la couche 502 à base de résine. Ce motif de ligne est destiné à présenter une largeur I selon y avant gravure de la couche de transfert 400. La largeur I est typiquement comprise entre quelques nanomètres et quelques dizaines de nanomètres, par exemple entre 5 nm et 50 nm, par exemple de l'ordre de 25 nm. Pour y parvenir, différentes techniques sont envisageables. La lithographie peut être configurée de façon à obtenir directement la largeur I souhaitée. Optionnellement une étape de réduction dimensionnelle dite « trimming » peut être effectuée après la première lithographie. Une telle étape de trimming est typiquement réalisée par gravure plasma en utilisant une chimie à base de bromure d'hydrogène et d'oxygène (HBr/O2) ou de chlore et d'oxygène (Cl2/O2). Le débit d'oxygène permet de contrôler la vitesse de trimming c'est-à-dire la consommation latérale de résine.

Comme illustré à la figure 3B, après formation du motif de ligne de largeur I dans la couche 502 à base de résine, le revêtement antireflets 501 peut être gravé par plasma, à l'aide d'une chimie de gravure à base de fluor, par exemple CH₂F₂/CF₄. Ce type de plasma permet d'utiliser un masque 500 à base de résine présentant une fine épaisseur, par exemple inférieure à 200 nm. La couche de transfert 400 est gravée selon z par une gravure plasma anisotrope à base d'oxygène ou hydrogène, connue de l'homme du métier. Un motif de ligne 410a de largeur I et de hauteur h_{c} est ainsi obtenu dans la couche de transfert 400. Le masque 500 est ensuite retiré. Le motif de ligne 410a est destiné à être transféré dans l'empilement de couches 300, 201 sous-jacent. Avantageusement, en choisissant un rapport h_{c}/l supérieur à 6 entre la hauteur h_{c} et la largeur I du motif de ligne 410a, un phénomène de flambage survient et génère des oscillations le long du motif de ligne 410a selon x.

Comme illustré à la figure 3C, le masque 300 est ensuite gravé de façon anisotrope selon z, par exemple par plasma à base d'une chimie fluorocarbonnée connue de l'homme du métier. Le motif de ligne 410a est ainsi transféré dans le masque 300 de façon à former un motif de ligne 310_{KO} présentant des oscillations selon x.

L'empilement de grille 201 est ensuite gravé de façon anisotrope selon z par exemple par plasma à base d'une chimie CH2F2 / SF6 / N2 / He ou HBr / O2 / He connue de l'homme du métier. Le motif de ligne 310_{KO} est ainsi transféré dans l'empilement de grille 201 de façon à former une grille 211_{KO} présentant des oscillations selon x.

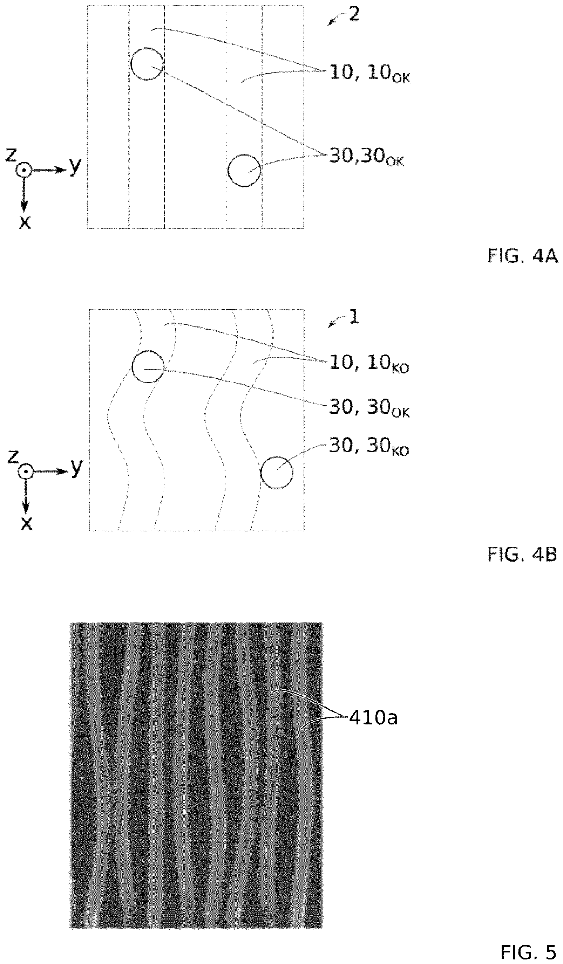

Les figures 4A et 4B représentent de manière schématique en vue de dessus des pistes électriques 10 et des vias 30 d'un niveau d'interconnexions, respectivement dans une zone fonctionnelle 2 du circuit intégré (figure 4A), et dans une zone d'individualisation 1 du circuit intégré (figure 4B), au niveau BEOL.

Comme illustré à la figure 4A, dans la zone fonctionnelle 2 du circuit intégré, les pistes électriques 10_{OK} sont sensiblement rectilignes et les vias 30_{OK} sont sensiblement centrés vis-à-vis des pistes électriques 10_{OK}. Les vias 30_{OK} connectent électriquement les pistes électriques 10_{OK} de façon nominale.

Comme illustré à la figure 4B, dans la zone d'individualisation 1 du circuit intégré, les pistes électriques 10_{KO} présentent des oscillations et le ou les vias 30_{KO} sont désalignés vis-à-vis des pistes électriques 10_{KO}. Les vias 30_{KO} sont ici électriquement mal connectés ou non connectés aux pistes électriques 10_{KO}. Dans cet exemple, les vias 30_{KO} sont correctement disposés selon le plan d'agencement du circuit intégré, et le désalignement provient de la morphologie ondulée des pistes électriques 10_{KO}.

La figure 5 correspond à une image de Microscopie Electronique à Balayage (MEB) sur laquelle des motifs de ligne 410a oscillants ont été réalisés.

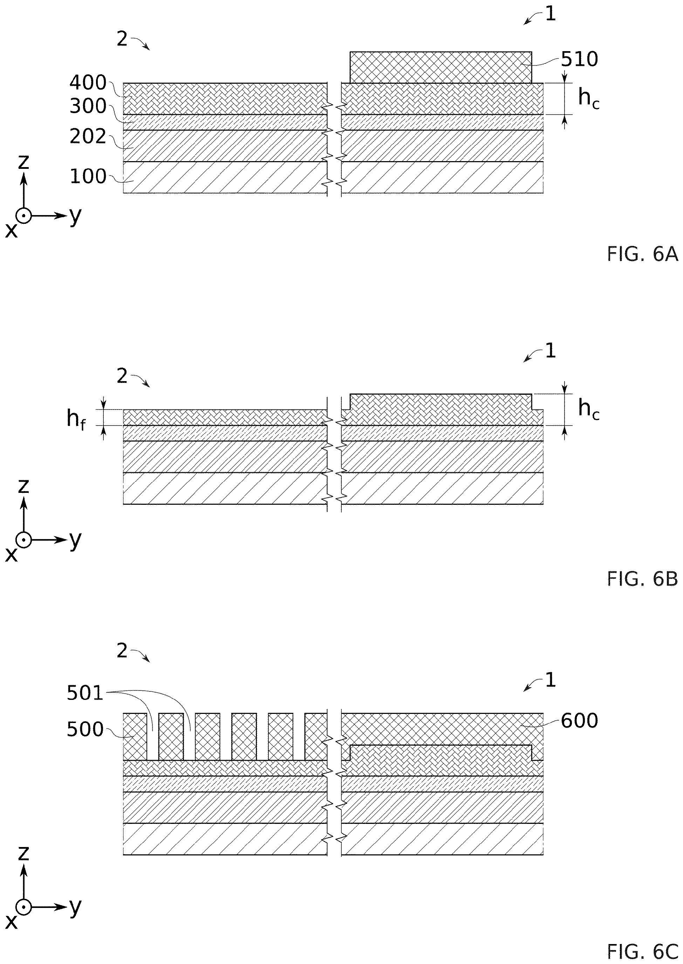

Les figures 6A à 6F illustrent schématiquement des étapes de formation de pistes électriques 10_{OK} dans une zone fonctionnelle 2 (zone non PUF) du circuit intégré, et de pistes électriques 10_{KO} oscillantes dans une zone d'individualisation 1 (zone PUF) du circuit intégré, selon un mode de réalisation du procédé au niveau BEOL.

Le substrat 100 porte ici une couche diélectrique 202. Le substrat 100 peut ici comprendre un niveau FEOL et/ou d'autres niveaux BEOL.

La couche diélectrique 202 peut être à base de SiO2. Elle peut également comprendre plusieurs couches ou sous-couches, par exemple une couche d'arrêt de gravure en SiCN.

La couche diélectrique 202 est surmontée par la couche 300 de masque dur. Ce masque 300 peut être à base de titane Ti ou de nitrure de titane TiN. Il peut être formé par dépôt physique en phase vapeur (PVD).

La couche de transfert 400 est formée sur le masque dur 300, comme précédemment.

Comme illustré à la figure 6A, le même empilement comprenant les couches 200, 300, 400 est formé au niveau des zones PUF 1 et non PUF 2. La couche de transfert 400 présente à ce stade une même épaisseur h_{c} au niveau de chacune des zones PUF 1 et non PUF 2. Pour moduler cette épaisseur h_{c} en fonction des zones PUF 1 et non PUF 2, un masque de protection 510 est d'abord déposé sur la zone PUF 1. Ce masque de protection 510 peut être à base de résine, de façon similaire au masque 500 à base de résine utilisé pour la structuration par lithographie de la couche de transfert 400.

L'épaisseur h_{f} de la couche de transfert 400 est diminuée dans la zone non PUF 2, tandis que la zone PUF 1 reste protégée (figure 6B). Cette réduction d'épaisseur peut être réalisée par une étape de gravure pleine plaque.

Après réduction de l'épaisseur h_{f} de la couche de transfert 400 dans la zone non PUF 2, un procédé classique de lithographie/gravure peut être mis en œuvre dans la zone non PUF 2 en protégeant la zone PUF 1 par un masque de protection 600 (figure 6C).

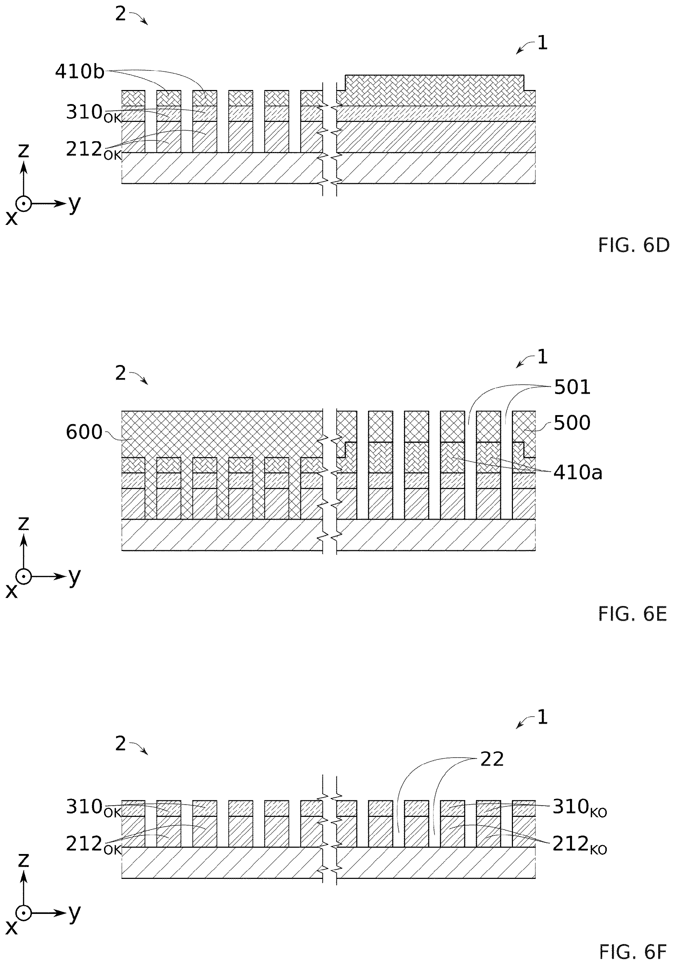

Des tranchées sont ensuite réalisées dans l'empilement de la zone non PUF 2 (figure 6D) à partir des ouvertures 501 du masque 500. Les motifs de lignes 410b ainsi obtenus présentent une largeur l_{f} et une hauteur h_{f} telles que h_{f}/l_{f} < 6. Cela évite un flambage des motifs de lignes 410b. Les motifs de lignes 410b ne présentent pas d'oscillations. Ils sont par exemple rectilignes. Les lignes diélectriques 212_{OK} surmontés des motifs de lignes 310_{OK} formés dans cette zone non PUF 2 ne présentent donc pas non plus d'oscillations. Cela permet de former un niveau de pistes métalliques fonctionnelles. Le masque de protection 600 est ensuite retiré de la zone PUF 1, de façon à mettre en œuvre le procédé décrit plus haut dans la zone PUF 1. Des tranchées sont ainsi réalisées à partir des ouvertures 501 du masque 500 dans l'empilement de la zone PUF 1 tandis que la zone non PUF 2 est protégée par un masque de protection 600 (figure 6E). Les motifs de lignes 410a ainsi obtenus présentent une largeur I et une hauteur h_{c} telles que h_{c}/l > 6. Cela induit un flambage des motifs de lignes 410a. Les motifs de lignes 410a présentent donc des oscillations. Les lignes diélectriques 212_{KO} surmontés des motifs de lignes 310_{KO} formés dans cette zone PUF 1 présentent également des oscillations (figure 6F). Cela permet de former un niveau de pistes métalliques dysfonctionnelles, présentant des variations de largeur et/ou de position et/ou des ondulations. Les niveaux de masque 410a, 410b et 310_{OK}, 310_{KO} sont ensuite retirés. Les tranchées 22 sont alors remplies de métal et planarisées pour former un niveau de pistes métalliques dans les zones PUF1 et non PUF 2.

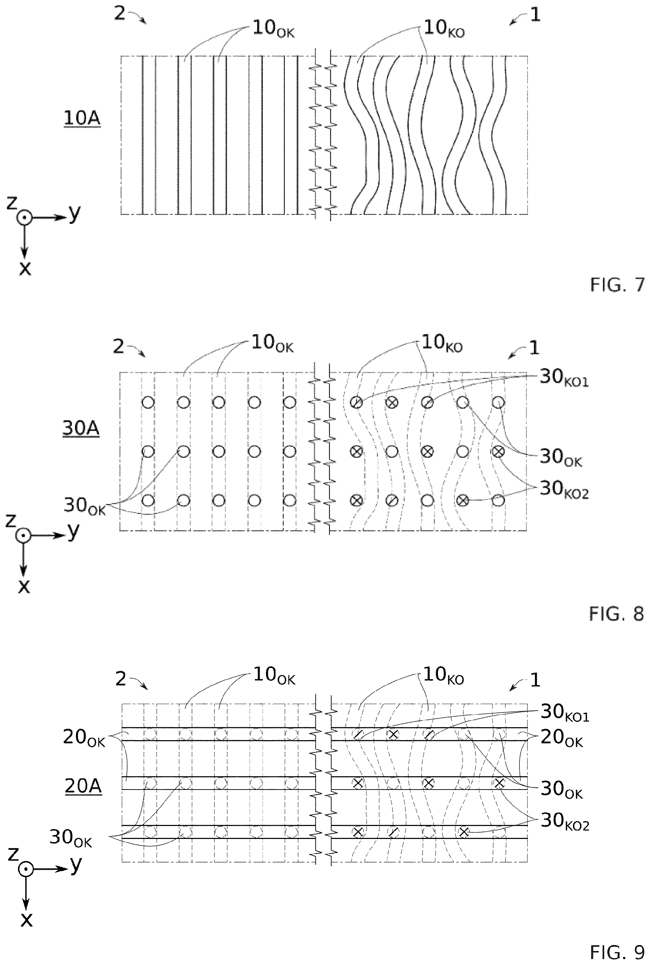

La figure 7 illustre schématiquement en vue de dessus les pistes électriques formées dans les zones PUF1 et non PUF 2 après remplissage des tranchées et planarisation. Les pistes électriques 10_{OK} du premier niveau 10A de la zone non PUF 2 sont typiquement rectilignes, tandis que les pistes électriques 10_{KO} du premier niveau de la zone PUF 1 présentent des ondulations et/ou des variations de largeur aléatoires.

Ainsi, lorsque les vias sont formés selon le *layout* initial du circuit intégré, les vias de la zone non PUF 2 sont des vias fonctionnels 30_{OK}, et les vias de la zone PUF 1 comprennent des vias dysfonctionnels ou inactifs 30_{KO1}, 30_{KO2} (figure 8). Les vias sont typiquement formés simultanément dans les zones PUF 1 et non PUF 2. Les vias 30_{OK} sont des vias fonctionnels connectés électriquement aux pistes électriques 10_{OK} du premier niveau 10A. Les vias dysfonctionnels 30_{KO1} sont typiquement partiellement connectés aux pistes électriques 10_{KO} du premier niveau. Ils présentent notamment une résistance électrique bien supérieure aux vias fonctionnels 30_{OK}. Les vias inactifs 30_{KO2} sont typiquement non connectés aux pistes électriques 10_{KO} du premier niveau.

Selon une possibilité, les vias dysfonctionnels 30_{KO1} sont repérés, par exemple en mesurant leur résistance. Il est alors préférable de les désactivés. Cela permet de figer leur comportement électrique. Cela améliore la stabilité du diagramme de réponse du circuit intégré dans le temps.

La figure 9 illustre schématiquement en vue de dessus les pistes électriques 20_{OK} du deuxième niveau 20A formées dans les zones PUF1 et non PUF 2. Les pistes électriques 20_{OK} du deuxième niveau sont typiquement formées simultanément dans les zones PUF 1 et non PUF 2, selon le *layout* initial du circuit intégré.

Au vu de la description qui précède, il apparaît clairement que le procédé proposé offre une solution particulièrement efficace pour réaliser une zone d'individualisation de type PUF, au niveau FEOL et/ou au niveau BEOL.

L'invention n'est pas limitée aux modes de réalisations précédemment décrits. D'autres modes de réalisation du procédé sont évidemment possibles. Le procédé peut notamment être mis en œuvre pour générer des oscillations au niveau du premier niveau 10A de pistes électriques et/ou au niveau du deuxième niveau 20A de pistes électriques dans une zone d'individualisation. Cela augmente encore la probabilité que certains vias du niveau d'interconnexion d'une zone d'individualisation soient mal connectés avec les pistes électriques de l'un et/ou l'autre des premier et deuxième niveaux. Selon une possibilité, les pistes électriques du deuxième niveau sont déformées selon le principe du procédé, alternativement ou en combinaison avec les pistes électriques du premier niveau.

En outre on peut prévoir que les motifs de ligne des premiers et deuxième niveaux ne soit pas rectilignes, comme illustré sur les figures 7 à 9, mais qu'ils soient curvilignes.

## Revendications

1. Procédé de réalisation d'une zone d'individualisation (1) d'une puce microélectronique, ladite puce présentant au moins une autre zone (2), distincte de la zone d'individualisation (1), destinée à former une zone fonctionnelle de la puce, le procédé comprenant au moins les étapes suivantes effectuées au niveau de la zone d'individualisation (1) de la puce :
- fournir un empilement comprenant au moins une couche de masque (300),
- former une couche de transfert (400) à base d'un matériau carboné hydrogéné sur la couche de masque (300), ladite couche de transfert (400) présentant une épaisseur hc,
- graver la couche de transfert (400) de sorte à former des premiers motifs de lignes (410) de largeur I organisés selon un plan d'agencement prédéfini et traversant la zone d'individualisation (1) de part en part, lesdits premiers motifs de lignes (410) étant destinés à être transférés dans la couche de masque (300),
- graver la couche de masque (300) entre les premiers motifs de lignes (410), de sorte à former des deuxièmes motifs de lignes (310) dans la couche de masque (300), sous les premiers motifs de lignes (410),
le procédé étant **caractérisé en ce que** l'épaisseur hc et la largeur I sont choisies telles que hc/l ≥ 6, de sorte à ce que les premiers motifs de lignes (410) présentent, après gravure de la couche de transfert (400), des oscillations aléatoires.

2. Procédé selon la revendication précédente dans lequel la formation de la couche de transfert (400) comprend une centrifugation du matériau carboné hydrogéné.

3. Procédé selon la revendication 1 dans lequel la formation de la couche de transfert (400) comprend un dépôt de carbone amorphe.

4. Procédé selon l'une quelconque des revendications précédentes dans lequel les premiers motifs de lignes (410) sont rectilignes avant gravure de la couche de transfert (400).

5. Procédé selon l'une quelconque des revendications précédentes dans lequel la zone d'individualisation (1) de la puce comprend au moins :
- un niveau de transistors comprenant des grilles (211) de transistors,
- un niveau de contacts comportant des vias (21) destinés à connecter électriquement les grilles (211) des transistors,
l'empilement comprenant au moins un empilement de grille (201) sous la couche de masque (300),
ledit procédé comprenant en outre :
- une gravure dudit empilement de grille (201) entre les deuxièmes motifs de lignes (310) formés dans la couche de masque (300), de sorte à former les grilles (211, 211KO) du niveau de transistors, sous lesdits deuxièmes motifs de lignes (310),
- une formation des vias (21, 21OK, 21KO) du niveau de contacts en fonction du plan d'agencement prédéfini,
les oscillations aléatoires étant telles que certains au moins des vias (21KO) ne sont pas connectés ou ne sont pas entièrement connectés aux grilles (211) du niveau de transistors.

6. Procédé selon la revendication précédente dans lequel la couche de masque (300) est à base d'au moins un matériau pris parmi le dioxyde de silicium et le nitrure de silicium.

7. Procédé selon l'une quelconque des revendications 1 à 5 dans lequel la zone d'individualisation (1) de la puce comprend au moins :
- un premier (10A) et un deuxième (20A) niveaux de pistes électriques (10, 20),
- un niveau (30A) d'interconnexions situées entre les premiers (10A) et deuxième (20A) niveaux de pistes électriques (10, 20) et comportant des vias (30) destinés à connecter électriquement des pistes électriques (10) du premier niveau (10A) avec des pistes électriques (20) du deuxième niveau (20A),
l'empilement comprenant au moins une couche diélectrique (202) sous la couche de masque (300),
ledit procédé comprenant en outre :
- une gravure de ladite couche diélectrique (202) entre les deuxièmes motifs de lignes (310) formés dans la couche de masque (300), de sorte à former des tranchées (22) dans la couche diélectrique (202),
- un remplissage par un matériau électriquement conducteur des tranchées (22) formées dans la couche diélectrique (202), de sorte à former les pistes électriques de l'un au moins parmi les premier (10A) et deuxième (20A) niveaux de pistes électriques (10, 20),
- une formation des vias (30, 30OK, 30KO1, 30KO2) du niveau d'interconnexions (30A) en fonction du plan d'agencement prédéfini,
- une formation de l'autre parmi les premier (10A) et deuxième (20A) niveaux de pistes électriques (10, 20),
les oscillations aléatoires étant telles que certains au moins des vias (30KO1, 30KO2) ne sont pas connectés ou ne sont pas entièrement connectés aux pistes électriques (10KO) du premier niveau (10A) ou du deuxième niveau (20A) de pistes électriques (10, 20).

8. Procédé selon la revendication précédente dans lequel la couche de masque (300) est à base d'au moins un matériau pris parmi le titane et le nitrure de titane.

9. Procédé selon l'une quelconque des revendications précédentes comprenant en outre une formation de motifs de lignes (410b) dans la zone fonctionnelle (2), lesdits motifs de lignes (410b) présentant une hauteur hf et une largeur lf telles que hf/lf < 6.

10. Procédé de réalisation d'un dispositif microélectronique comportant au moins un circuit intégré comprenant au moins une zone d'individualisation (1), le procédé de réalisation du dispositif microélectronique comprenant la réalisation de la zone d'individualisation (1) en mettant en œuvre le procédé selon l'une quelconque des revendications précédentes sur une partie seulement du circuit intégré.
